# EUROPÄISCHE PATENTSCHRIFT

(11) **EP 2 278 177 B1**
(45) Veröffentlichungstag und Bekanntmachung des Hinweises auf die Patenterteilung: **12.10.2016**
(21) Anmeldenummer: 10007432.7
(22) Anmeldetag: 19.07.2010
(51) Int. Cl.: F16B 41/00, F16P 1/02

(54) **Verliersicherung mit einer Schraube und Schutzeinrichtung für ein Maschinenteil**
Device preventing loss with a screw and protection device for a machine part
Sécurité anti-perte dotée d'une vis et dispositif de protection pour un élément de machine

(30) Priorität: 20.07.2009 DE 102009034128; 28.01.2010 DE 202010001511 U
(43) Veröffentlichungstag der Anmeldung: 26.01.2011
(73) Patentinhaber: Haver & Boecker oHG, 59302 Oelde (DE)
(72) Erfinder: Schöneberger, Erik, 59302 Oelde (DE)
(74) Vertreter: BSB Intellectual Property Law

(56) Entgegenhaltungen:
- EP-A2- 1 893 001
- DE-C1- 4 130 415
- FR-A1- 2 794 822
- FR-A1- 2 796 427
- FR-A1- 2 807 122
- JP-A- 3 061 710
- US-A- 3 263 949
- US-A1- 2001 048 860
- US-A1- 2003 210 968
- US-A1- 2007 204 456

## Beschreibung

Die vorliegende Erfindung betrifft eine Verliersicherung mit einer verliersicher aufgenommenen Schraube und eine Schutzeinrichtung für ein Maschinenteil umfassend eine Schutzverkleidung, welche mit Hilfe wenigstens einer Schraube befestigt wird.

Im Stand der Technik sind verschiedene Vorrichtungen, Einrichtungen und Verfahren bekannt geworden, mit denen Schutzverkleidungen an Maschinen oder Maschinenteilen angeordnet werden können.

Nachteilig an den bekannten Schutzverkleidungen und Schutzeinrichtungen für Maschinenteile ist, dass die zur Befestigung benötigten Schrauben bei der Demontage beispielsweise zur Seite gelegt werden und verloren gehen können oder von dritten Personen weggeräumt werden, sodass sie anschließend nicht mehr zur Verfügung stehen.

Mit der EG-Richtlinie MRL 2006/42/EG wird eine Verliersicherung für Befestigungselemente an trennenden Schutzeinrichtungen gefordert. Bislang gibt es praktisch nur Verliersicherungen für bestimmte Werkstoffe und für Gewindegrößen bis M6. Dabei sind diese Verliersicherungen durch genaue Bohrungen zu platzieren und lassen beim Montieren keinen Spielraum zum Finden der Gewindelöcher.

Eine bekannte Verliersicherung offenbart das Dokument US 2003/ 0210968 A.

Um Schrauben an einem Gegenstand zu befestigen sind auch Verliersicherungen bekannt geworden, die z.B. aus Gummi gefertigt sind. In diesen Verliersicherungen werden die Schrauben durch das federnde Material bedingt federnd aufgenommen. Dadurch ist nur eine undefinierte Befestigung möglich, da das gummiartige Material der Verliersicherung nachgeben kann und somit ein nicht reproduzierbares Befestigungsergebnis vorliegt.

Da das federnde Material dieser Verliersicherungen nachgeben kann, ist auch eine Befestigung mit einem ausreichenden Drehmoment nicht sicher gewährleistet. Ein Lösen der Verbindung kann auch über eine längere Zeitspanne nach und nach erfolgen. Dadurch kann sich die Schraube mit der Zeit lockern und eine sichere Befestigung ist nicht mehr gegeben. Durch Versuche den federnden Effekt durch besonders starkes Anziehen der Schraube zu minimieren, könnte es eventuell sogar zu einer Überbelastung des federnden Materials und/oder des Gewindes kommen.

Nicht auszuschließen ist auch, dass sich das Material der Verliersicherung z.B. durch Temperaturschwankungen verändert. Auch dadurch oder durch andere Umweltbelastungen wie z.B. UV-Strahlung kann das gummiartige Material spröde werden und sich die Verbindung lösen. Dies ist bei einer federnd gehaltenen Schraube auch allein durch Vibrationen denkbar.

Lösungen, bei denen eine Schraube mit einer Sicherungsmutter versehen wird, sind für die Anwendung unpraktisch, da dadurch die Montage in engen Bereichen stark eingeschränkt wird. Wellensicherungsringe oder Scheiben erfüllen nicht die Aufgabe der Sicherung, da die Axialkräfte der Schraubenbefestigung die Sicherungskraft überwinden kann.

Fast alle bekannten Lösungen erfordern eine Bearbeitung der vorhandenen Konstruktionen zur Anbringung von Schutzverkleidungen an Maschinenteilen.

Es ist daher die Aufgabe der vorliegenden Erfindung eine Verliersicherung insbesondere für die Verwendung an einer Schutzeinrichtung für ein Maschinenteil zur Verfügung zu stellen, die flexibel einsetzbar ist und definierte und reproduzierbare Bedingungen gewährleistet. Diese Aufgabe wird gelöst durch eine Verliersicherung mit den Merkmalen des Anspruchs 1 und durch eine Schutzeinrichtung mit einer Verliersicherung mit den Merkmalen des Anspruchs 12. Bevorzugte Weiterbildungen der Erfindung sind Gegenstand der Unteransprüche. Weitere Vorteile und Merkmale der vorliegenden Erfindung ergeben sich aus dem Ausführungsbeispiel.

Die erfindungsgemäße Verliersicherung umfasst eine Sicherungseinheit und einer verliersicher damit verbundenen Schraube. Diese ist bevorzugt drehbar gegenüber der Sicherungseinheit befestigt. Die Verliersicherung ist an wenigstens einer Verbindungsstelle mit einem zu befestigenden Gegenstand verbindbar. Besonders eignet sich die Verliersicherung für die Verwendung mit einer Schutzverkleidung oder einem Maschinenteil. Die Sicherungseinheit umfasst eine starre Scheibe zur Abstützung der Schraube und einen elastischen Streifen, um die Sicherungseinheit flexibel auszubilden und die Schraube starr abzustützen. Die starre Scheibe kann insbesondere aus Metall gefertigt sein. Dabei weist die Scheibe eine Durchgangsöffnung auf, welche einen größeren Innendurchmesser aufweist, als der Innendurchmesser eines Durchgangslochs des elastischen Streifens. So wird die die Schraube nur mittels des elastischen Streifens an dem elastischen Streifen gehalten wird, indem das Material des elastischen Streifens von dem Gewinde örtlich verdrängt wird.

Eine erfindungsgemäße Verliersicherung hat viele Vorteile. Dadurch, dass die erfindungsgemäße Sicherungseinrichtung einen elastischen Streifen und eine starre Scheibe umfasst, bleibt die Verliersicherung beweglich gegenüber dem Gegenstand, an dem sie befestigt ist. Sie kann von dem Gegenstand weg gebogen oder an diesen herangeführt werden. Da die Schraube an der starren Scheibe abgestützt ist, können effektive und reproduzierbare Ergebnisse erreicht werden.

In bevorzugten Ausgestaltungen besteht die Sicherungseinheit wenigstens teilweise aus einem elastischen Material. Dadurch kann die Verliersicherung von dem Gegenstand, mit dem sie verbunden ist, weggeklappt werden. Der elastische Streifen ist bevorzugt an der Scheibe befestigt und nimmt den Schraubenschaft verliersicher auf.

In vorteilhaften Ausgestaltungen weist die Scheibe eine Durchgangsöffnung auf, durch die eine Schraube hindurch geführt werden kann.

Bevorzugt ist die flexible Sicherungseinheit mit einem Durchgangsloch auf dem Schraubenschaft befestigt. Dazu ist es vorteilhaft, dass wenigstens ein kleinster freier Innendurchmesser des Durchgangslochs kleiner als ein Außendurchmesser des Gewindes des Schraubenschafts der Schraube ist. Vorzugsweise ist wenigstens ein kleinster freier Innendurchmesser des Durchgangslochs kleiner als ein Außendurchmesser des Schraubenschafts.

Die erfindungsgemäße Schutzeinrichtung für wenigstens ein Maschinenteil ist mit wenigstens einer Schutzverkleidung versehen, die mit wenigstens einer Schraube befestigt wird. Dabei ist die Schutzverkleidung mit wenigstens einer Schrauböffnung zur Durchführung der Schraube ausgerüstet. Wenigstens eine Verliersicherung ist vorgesehen, welche an wenigstens einer Verbindungsstelle mit der Schutzverkleidung oder dem Maschinenteil verbunden ist und welche über wenigstens eine flexible Sicherungseinheit mit der Schraube verbunden ist, um die Schraube verliersicher an der Schutzverkleidung oder dem Maschinenteil aufzunehmen. Die Verliersicherung ist gemäß einer im Rahmen dieser Anmeldung beschriebenen Ausgestaltungen ausgeführt.

Durch die erfindungsgemäße Schutzeinrichtung wird eine flexible und vorteilhafte Lösung der Aufgabe zur Verfügung gestellt. Mit der erfindungsgemäßen Schutzeinrichtung können Schutzverkleidungen zuverlässig an Maschinenteilen oder zum Schutz von Maschinenteilen montiert werden, wobei die zur Montage benötigten Schrauben verliersicher an der Schutzverkleidung oder dem Maschinenteil aufgenommen werden. Dabei ist eine einfache Nachrüstbarkeit gewährleistet, ohne die Einbausituation aufwendig konstruktiv zu überarbeiten oder umzugestalten.

Dadurch wird eine zuverlässige Schutzeinrichtung zur Verfügung gestellt, bei der beispielsweise eine Platte oder ein Gehäuse vor die Gefahrenstelle geschraubt wird. Dabei stört die Sicherungseinheit der Verliersicherung weder die Optik, noch ist sie platzaufwendig und kann außerdem günstig hergestellt werden. Die Vormontage im Werk wird nicht eingeschränkt und beim Kunden kann im Servicefall die Schutzeinrichtung leicht gehandhabt werden. Bei Bedarf kann die Schutzverkleidung leicht demontiert werden.

In einer bevorzugten Weiterbildung ist wenigstens eine Schraube drehbar mit einer flexiblen Sicherungseinheit befestigt. Das bedeutet, dass die Schraube drehbar gegenüber der flexiblen Sicherungseinheit vorgesehen ist. Denkbar ist es auch, dass die Schraube fest mit der flexiblen Sicherungseinheit verbunden ist, wobei dann beim Anschrauben der Schraube für eine geeignete Drehbarkeit der gesamten Sicherungseinheit gesorgt werden muss.

In einer bevorzugten Weiterbildung ist die flexible Sicherungseinheit mit einem Durchgangsloch versehen und damit auf dem Schraubenschaft befestigt. Dabei ist insbesondere wenigstens ein kleinster freier Innendurchmesser des Durchgangslochs kleiner als ein Außendurchmesser des Schraubenschafts. Der kleinste freie Querschnitt ist insbesondere der kleinste Innendurchmesser des Durchgangslochs. Durch eine solche Konstruktion wird sichergestellt, dass die Sicherungseinheit nicht selbsttätig von dem Schraubenschaft abrutscht. Die Sicherungseinheit wird zuverlässig auf dem Schraubenschaft gehalten, sodass die Verliersicherheit gewährleistet kann.

Das Durchgangsloch weist insbesondere einen kleineren freien Innendurchmesser auf, als wenigsten ein Außendurchmesser des Schraubgewindes des Schraubenschafts der Schraube. In einer bevorzugten Ausgestaltung kann der freie Innendurchmesser des Durchgangslochs größer sein, als der minimale Außendurchmesser des Schraubgewindes und kleiner als der maximale Außendurchmesser des Schraubgewindes, sodass die Sicherungseinheit zuverlässig auf dem Schraubgewinde der Schraube gehalten wird.

Vorzugsweise ist das insbesondere als Durchgangsbohrung ausgeführte Durchgangsloch von einem elastischen Material umgeben, sodass der größere Schraubendurchmesser hindurch geführt werden kann, die Elastizität aber verhindert, dass die Schraube wieder heraus fällt. Bei einer aus Metall oder Blech bestehenden Variante kann das Blech z.B. entweder geschlitzt oder mit Nasen ausgeführt werden.

Vorzugsweise besteht die Sicherungseinheit wenigstens teilweise aus einem elastischen Material. Beispielsweise kann die Sicherungseinheit aus Kunststoff oder Gummi oder einem sonstigen elastischen Werkstoff bestehen. Dadurch wird dafür gesorgt, dass die Sicherungseinheit, welche beispielsweise an der Fixierungsstelle mit der Schutzverkleidung oder dem Maschinenteil verbunden ist, mit dem anderen Ende, wo die Schraube angebracht ist, von der Schutzverkleidung entfernt werden kann, um beispielsweise die Schraube aus der Schrauböffnung herauszunehmen.

Vorteilhafterweise umfasst die Sicherungseinheit einen elastischen Streifen und eine starre bzw. formstabile Scheibe, die insbesondere aus Metall bestehen kann, wobei der elastische Streifen an der Scheibe befestigt ist und an dem Schraubenschaft aufgenommen ist.

Erfindungsgemäß weist die Scheibe eine Durchführungsöffnung auf, welche einen größeren Innendurchmesser aufweist, als der Innendurchmesser des Durchgangslochs des elastischen Streifens. Bei einer solchen Ausgestaltung werden der elastische Streifen und somit die Sicherungseinheit nur mittels des elastischen Streifens an der Schraube gehalten, in dem das Material des elastischen Streifens von dem Gewinde örtlich verdrängt wird. Dadurch wird ein entsprechender Druck auf den elastischen Streifen ausgeübt, wodurch der elastische Streifen zuverlässig an der Schraube gehalten wird.

In weiteren bevorzugten Ausgestaltungen weist die Schraube wenigstens einen Hinterschnitt an dem Schraubenschaft oder an dem Schraubenkopf auf, um dort den elastischen Streifen verliersicher und zuverlässig aufzunehmen.

In vorteilhaften Ausgestaltungen ist die Verliersicherung an der Schutzverkleidung oder an dem Maschinenteil oder einem Pfosten oder dergleichen angenietet, angeschraubt, angeklebt, angeschweißt oder angeklipst. Die Verliersicherung kann mit der Schutzverkleidung, dem Maschinenteil oder einem Pfosten oder dergleichen auch über einen Splint oder ein sonstiges Befestigungsmittel verbunden sein. Möglich und besonders bevorzugt ist die Verbindung über einen Zapfen, der in ein Loch der Schutzverkleidung eingeführt und dort verrastet wird.

In allen Ausgestaltungen ist es bevorzugt, dass die Schutzverkleidung als Schutzhaube oder als Teil einer Schutzhaube ausgebildet ist. Beispielsweise kann die Schutzverkleidung als Maschinenverkleidung oder als Maschinengehäuse dienen. Es ist auch möglich, dass die Schutzverkleidung an einem Schutzzaun montiert wird.

In einer anderen Ausgestaltung umfasst eine erfindungsgemäße Verliersicherung eine Sicherungseinheit mit einer verliersicher damit verbundenen Schraube. Die Verbindungseinheit ist wenigstens an einer Verbindungsstelle mit einem zu befestigenden Gegenstand, insbesondere einer Schutzverkleidung oder einem Maschinenteil, verbindbar oder damit verbunden. Die Schraube ist drehbar gegenüber der flexiblen Sicherungseinheit befestigt.

In allen Ausgestaltungen ist es bevorzugt, dass die Sicherungseinheit einen elastischen Streifen und eine starre bzw. formstabile Scheibe umfasst. Der elastische Streifen kann aus Gummi, Kunststoff oder einem anderen flexiblen Material bestehen. Die starre Scheibe ist vorzugsweise eine Metallscheibe. Der elastische Streifen ist an der Scheibe befestigt und an dem Schraubenschaft aufgenommen.

Vorteilhaft weist die Scheibe einen dem Schraubkopf zugewandten breiteren Außendurchmesser und einen dem Schraubkopf abgewandten schmaleren Außendurchmesser auf. Diese Art von Scheibe ist dann in dem elastischen Streifen so aufgenommen, dass eine Befestigung mit einem definierten Drehmoment erreicht werden kann.

Besonders bevorzugt ist der elastische Streifen in einer Aussparung in der Scheibe aufgenommen. Die Scheibe kann den aufgenommen Teil des elastischen Streifens komplett überdecken. Die Sicherungseinheit ist in dieser Ausführungsform durch eine Ausnehmung in der Scheibe geführt.

Hierbei ist besonders bevorzugt der Innendurchmesser des elastischen Streifens kleiner als der Innendurchmesser der Scheibe ist. Dadurch wird eine Schraube von dem elastischen Streifen verliersicher aufgenommen.

Vorzugsweise ist in einer weiteren Ausgestaltung die Scheibe in einer dafür vorgesehenen Aussparung des elastischen Streifen eingelegt und an der dem Schraubkopf gegenüberliegenden Seite durch den elastischen Streifen eingefasst. Hierbei ist insbesondere die Durchgangsöffnung der Scheibe größer ist als Innendurchmesser des elastischen Streifens.

In einer weiteren besonders bevorzugten Ausgestaltung ist die Scheibe geschlitzt ausgebildet und in den elastischen Streifen aufgenommen. Dies kann beispielsweise durch ein Gussverfahren in einer Gussform erreicht werden.

Die Scheibe ist insbesondere so in dem elastischen Streifen aufgenommen, dass eine Befestigung mit einem definierten Drehmoment möglich wird.

Dabei ist vorteilhafter Weise der Schraubenschaft durch den Schlitz durchdringenden elastischen Streifen aufgenommen.

Vorzugsweise steht der Schraubkopf in direktem Kontakt zu der Scheibe. Weiterhin steht diese wiederum besonders bevorzugt in direktem Kontakt zu der Schutzverkleidung oder dem Maschinenteil.

Dadurch wird insbesondere der Druck des Schraubkopfs direkt über die Scheibe auf die Schutzverkleidung oder das Maschinenteil übertragen.

Vorteilhaft ist in dem elastischer Streifen wenigstens teilweise ein Drahtgeflecht vorgesehen. Das Geflecht ist so in dem Streifen angeordnet, dass bei gelöster Schraube eine höhere seitliche Stabilität des Streifens erreicht wird, ohne dass das Abklappen der Schraube von der Schutzverkleidung beeinträchtigt wird.

In einer weiteren vorteilhaften Ausgestaltung ist in der Durchgangsöffnung der Scheibe eine Halteeinrichtung vorgesehen, um den Schraubenschaft aufzunehmen. Diese Halteeinrichtung besteht bevorzugter Weise aus einem elastischen Material wie z.B. Gummi oder einem flexiblen Kunststoff.

Insbesondere betrifft die Erfindung auch eine der oben beschriebenen Schutzeinrichtung mit einer der zuvor beschriebenen Verliersicherungen.

Weitere Vorteile und Merkmale der vorliegenden Erfindung ergeben sich aus dem Ausführungsbeispiel, welches nachfolgend mit Bezug auf die beiliegenden Figuren beschrieben wird.

In den Figuren zeigen:
- Fig. 1: eine perspektivische Draufsicht auf eine erfindungsgemäße Schutzeinrichtung;
- Fig. 2: eine perspektivische Seitenansicht der Schutzeinrichtung nach Figur 1;
- Fig. 3: eine perspektivische Draufsicht auf die Sicherungseinheit der Schutzeinrichtung nach Figur 1;
- Fig. 4: A-D: Darstellung des Gebrauchs einer erfindungsgemäßen Schutzeinrichtung in einer perspektivischen Ansicht;
- Fig. 5: eine Explosionszeichnung einer erfindungsgemäßen Verliersicherung in Ansicht von oben;
- Fig. 6: eine Explosionszeichnung einer erfindungsgemäßen Verliersicherung in Ansicht von unten;
- Fig. 7: eine Ansicht einer erfindungsgemäßen Verliersicherung von unten;
- Fig. 8: eine Seitenansicht einer erfindungsgemäßen Verliersicherung;
- Fig. 9: einen Schnitt durch eine nicht erfindungsgemäße Verliersicherung;
- Fig. 10: einen Schnitt durch eine Scheibe für eine nicht erfindungsgemäße Verliersicherung;
- Fig. 11: eine Ansicht von unten auf eine erfindungsgemäße Verliersicherung mit integriertem Drahtgewebe;
- Fig. 12: eine perspektivische Draufsicht auf eine erfindungsgemäße Verliersicherung mit einer geschlitzten Scheibe 16;
- Fig. 13: eine schematische Teilansicht von oben auf eine erfindungsgemäße Verliersicherung mit einer geschlitzten Scheibe 16;
- Fig. 14: eine schematische Seitenansicht einer erfindungsgemäßen Verliersicherung; und
- Fig. 15: einen Schnitt durch eine Seitenansicht eines erfindungsgemäßen Befestigungsmittels 18.

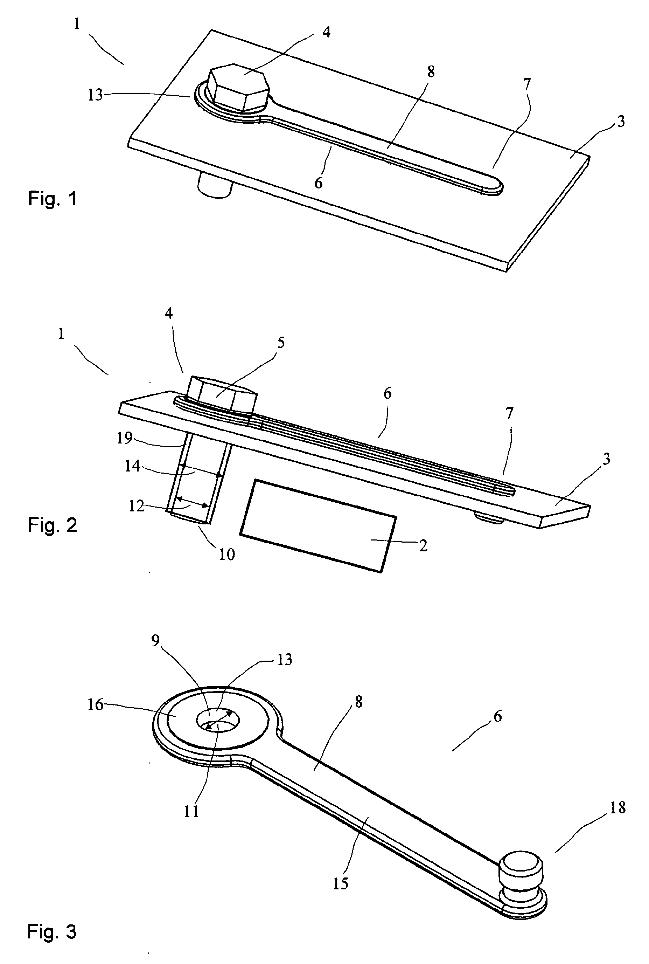

Mit Bezug auf die beiliegenden Figuren 1 - 3 wird nachfolgend ein Ausführungsbeispiel einer erfindungsgemäßen Schutzeinrichtung 1 beschrieben, welche hier zum Schutz eines nur schematisch eingezeichneten Maschinenteils 2 dient und wenigstens eine Schutzverkleidung 3 umfasst. Möglich ist es auch, dass die Schutzeinrichtung mehrere Schutzverkleidungen 3 aufweist, die über eine entsprechende Anzahl von Schrauben an einer Maschine, einem Maschinenteil, einem Pfosten oder dergleichen befestigt werden können.

In der perspektivischen Darstellung gemäß Figur 1 dargestellt, ist an der Schutzverkleidung 3 eine Verliersicherung 6 vorgesehen, die an der Verbindungsstelle 7 mittels eines Befestigungsmittels 18 befestigt ist.

Die Sicherungseinheit 8 erstreckt sich von der Verbindungsstelle 7 bis zu der Schraube 4 an dem anderen Ende der Sicherungseinheit 8, wobei die Schraube 4 mit dem Schraubenschaft 10 durch eine Schrauböffnung 13 der Verliersicherung 6 durchgeführt ist. Der Schraubenschaft 10 ragt durch eine Montageöffnung beziehungsweise eine Schrauböffnung 13 der Schutzverkleidung 3 hindurch, um mit einer mit einem Gewinde 19 versehenen Öffnung (nicht dargestellt) in dem Maschinenteil 2 verschraubt zu werden.

Die Verliersicherung 6 und insbesondere die Sicherungseinrichtung 8 bestehen wenigstens teilweise aus einem elastischen Material, wie beispielsweise einem Gummi oder einem sonstigen Kunststoff, sodass die Schraube 4 aus der Schrauböffnung 13 verliersicher entnommen werden kann, da die Sicherungseinheit 8 aufgrund des flexiblen Materials biegsam ausgeführt ist. Das elastische Material kann Gummi oder ein sonstiges flexibles oder elastisches Material sein. Beispielsweise sind auch Federbleche hierfür geeignet.

Die Schraube 4 umfasst einen Schraubenkopf 5 und den Schraubenschaft 10, an dem ein Außengewinde 19 vorgesehen ist. Der minimale Außendurchmesser 12 im Gewindegang im Bereich des Gewindes 19 ist entsprechend kleiner als der maximale Außendurchmesser 14 im Bereich des Gewindes 19. Hier ist ein freier Innendurchmesser 11 des Durchgangslochs 9 der Verliersicherung 6 kleiner als der Außendurchmesser 14, kann aber größer sein als der Außendurchmesser 12. An der Verliersicherung ist eine formstabile oder starre Scheibe 16 vorgesehen.

Dadurch bedingt, dass das Durchgangsloch einen freien Innendurchmesser aufweist, der kleiner als der maximale Außendurchmesser 14 des Gewindebereichs des Schraubenschafts 10 ist, wird die Schraube 4 zuverlässig in der Sicherungseinheit 8 der Verliersicherung 6 gehalten.

Wird die mit einem Gehäuse oder einem Maschinenteil 2 verschraubte Schraube 4 losgeschraubt, so kann die Schraube 4 gegenüber der Sicherungseinheit 8 herausgeschraubt werden. Da allerdings das Gewinde, in das die Schraube 4 hineingeschraubt wird wenigstens um die Wandstärke der Schutzverkleidung 3 beabstandet vorliegt, ist sichergestellt, dass in jedem Fall die Schraube 4 - nach dem Lösen der Verbindung mit einem Maschinenteil 2 - die Schraube noch zuverlässig an der Sicherungseinheit 8 gehalten wird.

Alternativ kann ein Hinterschnitt an dem Schraubenschaft 10 oder dem Schraubenkopf 5 vorgesehen sein, sodass sich die Position der Schraube 4 relativ zu der Sicherungseinheit 8 nicht ändert, auch wenn die Schraube 4 eingeschraubt oder ausgeschraubt wird.

Durch die Flexibilität der Sicherungseinheit 8, welche vorzugsweise als elastischer Streifen 15 ausgeführt ist, wird sichergestellt, dass die erfindungsgemäße Schutzeinrichtung 1 einfach und bequem zu bedienen ist.

Die Schutzeinrichtung 1 kann einfach nachgerüstet werden, da bestehende Schraubverbindungen ausgetauscht werden können. Dazu muss an der Schutzverkleidung oder dem Maschinenteil 2 nur an einer geeigneten Verbindungsstelle 7 der elastische Streifen 15 befestigt werden, sodass die Schraube 4 verliersicher mit der Schutzverkleidung oder dem Maschinenteil oder einem sonstigen Gerüst oder Ständer verbunden werden kann.

Ein erheblicher Vorteil ist, dass bei einer Schutzverkleidung 3 mit mehreren Befestigungsschrauben die Schutzverkleidung 3 zunächst an das Gehäuse oder das Maschinenteil 2 oder an den Rahmen an dem es befestigt werden soll, angehalten werden kann und der Benutzer überprüfen kann, ob die Anzahl und die Konfiguration der Befestigungslöcher mit den entsprechend Befestigungsaufnahmen an dem Maschinenteil 2 oder dergleichen übereinstimmen. Anschließend können die Schrauben 4 nacheinander einzeln an dem Maschinenteil 2 oder dergleichen befestigt werden, sodass eine einfache Montage ermöglicht wird.

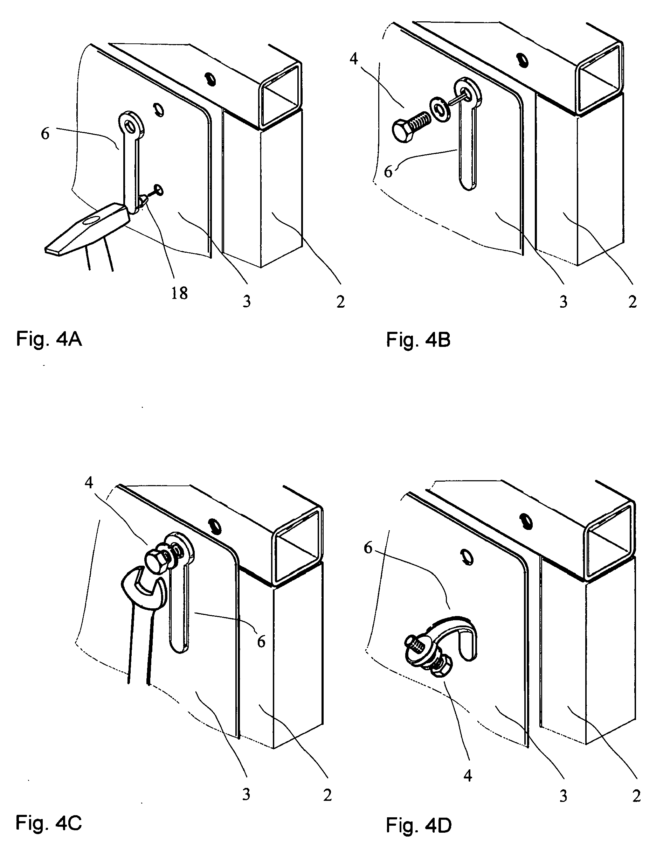

In Figur 4 ist die Benutzung einer erfindungsgemäßen Schutzeinrichtung 1 dargestellt. Die Schutzverkleidung 3 wird mit einer Schraube 4 an einem Maschinenteil 2 befestigt. Hierfür wird die Schraube 4 durch ein Bohrloch in der Schutzverkleidung 3 gesteckt und in ein Schraubloch in dem Maschinenteil 2 eingeschraubt. Damit die Schraube beim Abnehmen der Schutzverkleidung nicht verloren gehen kann, ist eine Verliersicherung 6 vorgesehen. Die Verliersicherung 6 kann mittels eines Befestigungsmittels 18 wie in Figur 4A dargestellt mit der Schutzverkleidung, aber auch mit dem Maschinenteil 2 oder einem Pfosten oder ähnlichem verbunden werden. Hierfür kann eventuell auch ein Werkzeug wie z.B. ein Hammer nötig sein. Ist die Verliersicherung 6 an der Schutzverkleidung 3 oder dem Maschinenteil 2 befestigt, kann die Schraube 4 durch die Verliersicherung 6 und das Bohrloch in der Abdeckung gesteckt werden und anschließend mit dem Maschinenteil 2 verschraubt werden.

Beim Lösen der Schraube 4 bleib diese wie in Figur 4D gezeigt mit der flexibel bewegbaren Verliersicherung 6 verbunden und kann nicht verloren gehen oder sogar in die Maschine fallen, wodurch ein großer Schaden entstehen könnte.

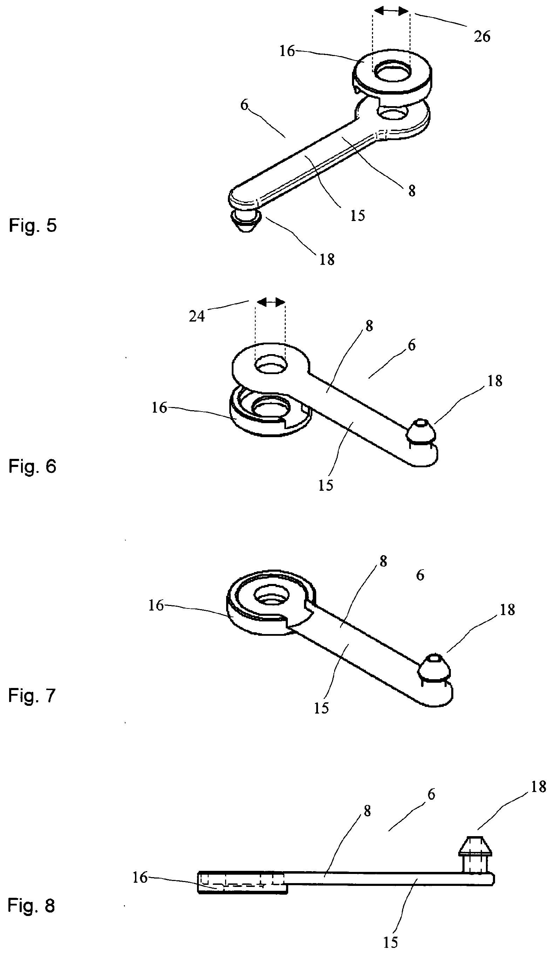

Die Figuren 5-8 zeigen eine besonders bevorzugte Ausführungsform einer erfindungsgemäßen Verliersicherung. Hierbei ist in Figur 5 eine Explosionszeichnung von oben dargestellt. Der elastische Streifen 15 wird in eine dafür vorgesehene Scheibe 16 aufgenommen. Die Scheibe 16 überdeckt dabei wie in Figur 8 dargestellt vollständig einen Bereich des elastischen Streifens 15. Dazu weist die Scheibe 16 eine von einem Durchgangsloch 9 durchsetzte geschlossene obere Seite auf. Von dieser Seite wird auch die Schraube durch die Durchgangsöffnung 9 geführt, wodurch der Schraubkopf 5 seine Kraft unmittelbar auf die Scheibe ausüben kann. Die Scheibe 16 ist weiterhin von der Unterseite entsprechend der Höhe des aufzunehmenden elastischen Streifens 15 ausgespart.

Weiterhin ist in dem durch die Aussparung entstehenden seitlichen Rand der Scheibe 16 ein freier Bereich angeordnet, durch den die Sicherungseinheit 8 aus der Scheibe 16 herausgeführt wird. Dadurch ist es möglich, wie in den Figuren 5-8 dargestellt, den elastischen Streifen 15 plan in die Scheibe 16 einzulegen.

Durch diese bevorzugte Anordnung ist insbesondere eine zuverlässige und reproduzierbare Anbringung der Schutzverkleidung 3 möglich, da die Kraft des Schraubkopfes 5 direkt über die geschlossene Seite der Scheibe 16 und den unteren Rand der Scheibe auf die Schutzverkleidung 3 wirken kann.

Um eine verliersichere Aufnahme der Schraube zu gewährleisten ist insbesondere der Innendurchmesser 24 des elastischen Streifens kleiner als der Innendurchmesser der Scheibe 26.

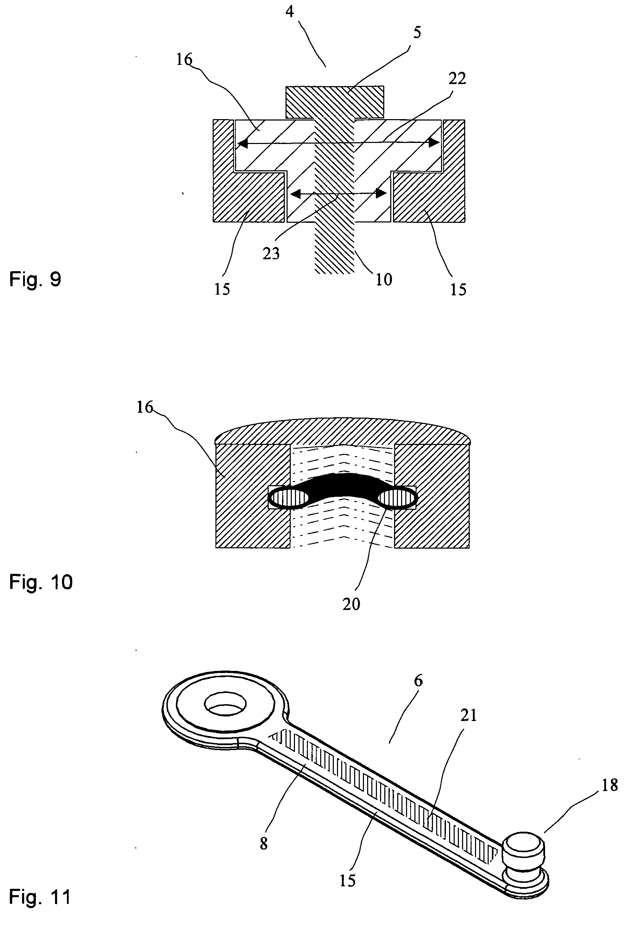

Eine nicht erfindungsgemäße Ausführungsform ist in Figur 9 dargestellt. Hierbei weist die Scheibe 16 in dem gezeigten Schnitt einen Bereich mit einem breiteren Außendurchmesser 22 und einen Bereich mit einem schmaleren Außendurchmesser 23 auf. Die derart ausgebildete Scheibe 16 wird in eine entsprechende Aussparung in dem elastischen Streifen 15 eingelegt.

Das Herausfallen der Scheibe 16 kann durch eine nicht auftragende Schicht des elastischen Streifens 15 gewährleistet werden. Besonders bevorzugt ist in dieser Ausführungsform der breitere Außendurchmesser 22 der Scheibe 16 dem Schraubkopf 5 zugewandt. In dieser Ausführungsform kann die Schraube 4 die Kraft direkt auf die Scheibe 16 und diese wiederum direkt auf die Schutzverkleidung 3 ausüben, wodurch eine Anbringung der Schutzverkleidung 3 mit einem definierten Drehmoment möglich wird.

In anderen bevorzugten Ausführungsformen der erfindungsgemäßen Verliersicherung ist die Scheibe 16 so in dem elastischen Streifen 15 gehalten, dass dieser keinen Kontakt zu der Schraube 4 hat, wodurch eine verliersichere Aufnahme unter Umständen nicht gewährleistet ist. In diesen Ausgestaltungen ist in der Scheibe 16 eine Aussparung, insbesondere in Form einer Nut, vorgesehen. In dieser Aussparung ist ein Haltemittel 20 angeordnet, das bevorzugter Weise die Eigenschaften des elastischen Streifens 15 hat. Dieses Haltemittel 20 ist derart ausgeprägt, dass es die Aussparung in der Scheibe 16 überragt und so in direkten Kontakt mit der Schraube 4 kommt, um diese in dem Durchgangsloch 9 der Scheibe 16 verliersicher aufzunehmen.

In Figur 11 ist eine erfindungsgemäße Verliersicherung gezeigt, in deren elastischen Streifen 15 wenigstens teilweise ein Drahtgeflecht 21 eingearbeitet ist. Dadurch wird eine bessere Stabilität und Langlebigkeit des elastischen Streifens 15 erreicht, wodurch dieser insbesondere sehr dünn ausgebildet sein kann. Je nach Art und Anordnung des Drahtgeflechts wird besonders bevorzugt nur die seitliche Stabilität verstärkt. Das Vor- und Zurückbewegen der Schraube hin zum oder weg vom Schraubloch wird in dieser Ausgestaltung dabei nicht beeinträchtigt.

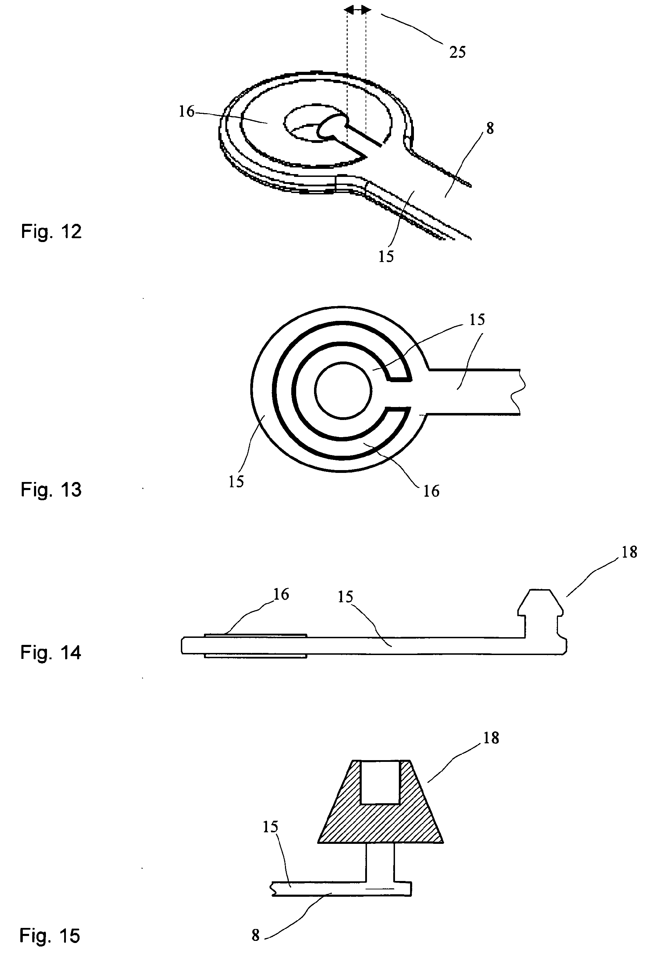

In Figur 12 wird eine weitere besonders bevorzugte Ausführungsform einer erfindungsgemäßen Verliersicherung beschrieben. Hierbei ist die Scheibe 16 in den elastischen Streifen 15 der Sicherungseinheit plan eingegossen. Dadurch ist eine Befestigung der Schutzverkleidung 3 mit einem definierten Drehmoment möglich, da die Schraube 4 in direktem Kontakt zu der Scheibe 16 und diese in direktem Kontakt zum Maschinenteil 2 steht.

Damit die Scheibe 16 eine feste Verbindung mit dem elastischen Streifen 15 eingehen kann, ist die Scheibe 16 in dieser bevorzugten Ausgestaltung geschlitzt ausgeführt. Dadurch kann der elastische Streifen beim Herstellungsprozess, z.B. in einer Gussform, den Schlitz 25 durchdringen und in das Durchgangsloch 9 der Scheibe 16 hineinragen, bevorzugt dieses teilweise, besonders bevorzugt aber komplett auskleiden. Dadurch kann eine Schraube verliersicher aufgenommen werden.

Die besonders bevorzugte Ausführungsform, in der das gesamte Durchgangsloch 9 der Scheibe 16 von dem elastischen Streifen 15 ausgekleidet ist, ist in Figur 13 schematisch in einer Aufsicht dargestellt.

Figur 14 zeigt eine Seitenansicht einer eben beschriebenen bevorzugten Ausführungsform. Hierbei ist anzumerken, dass die Scheibe 16 in dieser Figur der besseren Darstellung halber extrem dick dargestellt ist. In einer besonders bevorzugten Ausgestaltung ist die Scheibe 16 plan in dem elastischen Streifen 15 angeordnet und kann bevorzugter Weise auch hauchdünn, besonders bevorzugt nicht auftragend, von dem elastischen Streifen überzogen sein. Durch diese Art von Überzug bleibt der direkte Kontakt zwischen Schraube 4 und Scheibe 16, sowie zwischen der Scheibe 16 und der Schutzverkleidung 3 möglich, um diese Schutzverkleidung 3 mit einem definierten und reproduzierbaren Drehmoment zu befestigen.

Die Verliersicherung 6 kann an einer Schutzverkleidung 3 und/oder dem Maschinenteil 2 angenietet, angeschraubt, angeklebt, angeschweißt oder angeklipst sein oder auch über einen Splint oder ein Befestigungsmittel 18 mit der Schutzverkleidung 3 verbunden sein.

Ein solches Befestigungsmittel 18 kann in verschiedenen Formen ausgeprägt sein. In einer bevorzugten Ausführungsform kann das Befestigungsmittel 18 auch, wie es in Figur 15 dargestellt ist, innen hohl sein. Dies kann insbesondere durch eine Bohrung erreicht werden, um ein leichteres Anbringen des Befestigungsmittels 18 in einem Bohrloch in beispielsweise einer Schutzverkleidung 3 zu ermöglichen.

Durch eine solche Bohrung in dem Befestigungsmittel 18 kann die die Bohrung einfassende Wandung des oberen Bereichs des Befestigungsmittels 18 während der Durchführung durch ein dafür vorgesehenes Befestigungsloch kurzfristig nach innen wegfedern. Dadurch ein solches Zusammendrücken des Befestigungsmittels 18 wird das Befestigen der Verliersicherung 6 mit dem Befestigungsmittel 18 in einem dafür vorgesehen Loch vereinfacht. Je tiefer die Bohrung in dem Befestigungsmittel 18 ausgeführt ist, umso leichter ist das Durchführen durch ein Bohrloch. Nachdem der haltende Bereich des Befestigungsmittels 18 durch ein Bohrloch hindurch gesteckt ist, federt die die Bohrung einfassende Wandung des Befestigungsmittels 18 wieder in seine ursprüngliche Form und sichert zuverlässig die Befestigung der Verliersicherung.

Um die Befestigung mittels des Befestigungsmittels 18 noch komfortabler zu gestalten, ist der haltende Bereich des Befestigungsmittels 18 wenigstens teilweise konisch oder abgeschrägt ausgeprägt, um das Einführen des Befestigungsmittels 18 in ein dafür vorgesehenes Befestigungsloch einfacher zu gestalten. Auch durch eine solche Formgebung des Befestigungsmittels 18 wird das Befestigen der Verliersicherung 6 an einem Maschinenteil 2 oder einer Schutzverkleidung 3 erleichtert.

### Bezugszeichenliste:

- 1: Schutzeinrichtung
- 2: Maschinenteil
- 3: Schutzverkleidung
- 4: Schraube
- 5: Schraubenkopf
- 6: Verliersicherung
- 7: Verbindungsstelle
- 8: Sicherungseinheit
- 9: Durchgangsloch
- 10: Schraubenschaft
- 11: Innendurchmesser
- 12: Außendurchmesser
- 13: Schrauböffnung
- 14: Außendurchmesser
- 15: elastische Streifen
- 16: starre Scheibe
- 18: Befestigungsmittel
- 19: Gewinde
- 20: Haltevorrichtung
- 21: Drahtgeflecht
- 22: breiter Außendurchmesser
- 23: schmaler Außendurchmesser
- 24: Innendurchmesser von 15
- 25: Schlitz
- 26: Innendurchmesser von 16

## Patentansprüche

1. Verliersicherung (6) mit einer Sicherungseinheit (8) und einer verliersicher damit verbundenen Schraube (4), die drehbar gegenüber der Sicherungseinheit (8) befestigt ist, welche an wenigstens einer Verbindungsstelle (7) mit einem zu befestigenden Gegenstand, insbesondere einer Schutzverkleidung (3) oder einem Maschinenteil (2), verbindbar ist,
**dadurch gekennzeichnet,**
**dass** die Sicherungseinheit (8) eine starre Scheibe (16) zur Abstützung der Schraube (4) und einen elastischen Streifen (15) umfasst, um die Sicherungseinheit (8) flexibel auszubilden und die Schraube (4) starr abzustützen, wobei die Scheibe (16) eine Durchgangsöffnung aufweist, welche einen größeren Innendurchmesser (26) aufweist, als der Innendurchmesser (24) eines Durchgangslochs des elastischen Streifens (15) und wobei die Schraube (4) nur mittels des elastischen Streifens (15) an dem elastischen Streifen (15) gehalten wird, indem das Material des elastischen Streifens (15) von dem Gewinde örtlich verdrängt wird.

2. Verliersicherung (6) nach Anspruch 1, wobei die Sicherungseinheit (8) wenigstens teilweise aus einem elastischen Material besteht und der elastische Streifen (15) an der Scheibe (16) befestigt ist und an dem Schraubenschaft (10) aufgenommen ist.

3. Verliersicherung (6) nach einem der vorherigen Ansprüche, wobei wenigstens ein kleinster freier Innendurchmesser (11) des Durchgangslochs (9) kleiner als ein Außendurchmesser (14) des Gewindes (19) des Schraubenschafts (10) der Schraube (4) und/oder kleiner als ein Außendurchmesser (12) des Schraubenschafts (10) ist.

4. Verliersicherung (6) nach einem der vorherigen Ansprüche, wobei die Scheibe (16) einen dem Schraubkopf (5) zugewandten breiteren Außendurchmesser (22) und einen dem Schraubkopf abgewandten schmaleren Außendurchmesser (23) aufweist, wobei die Scheibe in einer dafür vorgesehenen Aussparung des elastischen Streifens (15) so aufgenommen wird, dass eine Befestigung mit einem definierten Drehmoment möglich wird.

5. Verliersicherung (6) nach einem der vorherigen Ansprüche, wobei der elastische Streifen (15) in einer Aussparung in der Scheibe (16) aufgenommen ist und die Sicherungseinheit (8) durch eine Ausnehmung in der Scheibe (16) geführt ist.

6. Verliersicherung (6) nach einem der vorherigen Ansprüche, wobei die Scheibe (16) in einer dafür vorgesehenen Aussparung des elastischen Streifen (15) eingelegt ist und an der dem Schraubkopf (5) gegenüberliegenden Seite durch den elastischen Streifen (15)eingefasst ist, wobei die Durchgangsöffnung (26) der Scheibe (16) größer ist als Innendurchmesser (24) des elastischen Streifens (15).

7. Verliersicherung (6) nach einem der vorherigen Ansprüche, wobei die Scheibe (16) geschlitzt ist und in dem elastischen Streifen (15) aufgenommen ist.

8. Verliersicherung (6) nach einem der vorherigen Ansprüche, wobei der Schraubenschaft (10) durch den Schlitz (25) durchdringenden elastischen Streifen (15) aufgenommen ist.

9. Verliersicherung (6) nach mindestens einem der vorherigen Ansprüche, wobei der Schraubkopf (5) in direktem Kontakt zu der Scheibe (16) und diese in direktem Kontakt zu der Schutzverkleidung (2) oder dem Maschinenteil(3) steht und/oder so in dem elastischen Streifen (15) aufgenommen ist, dass eine Befestigung mit einem definierten Drehmoment möglich wird.

10. Verliersicherung (6) nach einem der vorherigen Ansprüche, wobei in der elastische Streifen (15) wenigstens teilweise aus Drahtgeflecht (21) besteht.

11. Schutzeinrichtung (1) für wenigstens ein Maschinenteil (2) mit wenigstens einer Schutzverkleidung (3) und mit wenigstens einer Schraube (4) zur Befestigung der Schutzverkleidung (3) an einer Schrauböffnung (13) des Maschinenteils (2),
**dadurch gekennzeichnet,**
**dass** wenigstens eine Verliersicherung (6) nach einem der vorhergehenden Ansprüche vorgesehen ist, um die Schraube (4) verliersicher an der Schutzverkleidung (3) oder dem Maschinenteil (2) aufzunehmen.

12. Schutzeinrichtung (1) nach Anspruch 11, wobei die Verliersicherung (6) an der Schutzverkleidung (3) und/oder dem Maschinenteil angenietet, angeschraubt, angeklebt, angeschweißt oder angeklipst ist oder über einen Splint oder ein Befestigungsmittel (18) mit der Schutzverkleidung (3) verbunden ist.

## Claims

1. Captive apparatus (6). with a securing unit (8) and a screw (4) captively secured thereto and fastened to be rotatable relative to the securing unit (8) which can be connected in at least one connecting point (7) with an object to be secured, in particular with protective covering (3) or a machinery part (2),
**characterized in that** the securing unit (8) comprises a rigid disk (16) to support the screw (4) and an elastic strip (15) to configure a flexible securing unit (8) and a rigid screw (4) support, the disk (16) comprising a through hole whose inner diameter (26) is larger than the inner diameter (24) of a through hole of the elastic strip (15) and wherein the screw (4) is retained on the elastic strip (15) only by means of the elastic strip (15) **in that** the screw thread locally displaces the material of the elastic strip (15).

2. The captive apparatus (6) according to claim 1 wherein the securing unit (8) consists at least partially of an elastic material and the elastic strip (15) is attached to the disk (16) and received on the screw shaft (10).

3. The captive apparatus (6) according to any of the preceding claims wherein at least the smallest clear inner diameter (11) of the through hole (9) is smaller than an outer diameter (14) of the thread (19) of the screw shaft (10) of the screw (4) and/or smaller than an outer diameter (12) of the screw shaft (10).

4. The captive apparatus (6) according to any of the preceding claims wherein the disk (16) comprises a wider outer diameter (22) on the side facing the screw head (5) and a narrower outer diameter (23) on the side facing away from the screw head, wherein the disk is received in a dedicated recess of the elastic strip (15) so as to enable attachment at a defined rotational force.

5. The captive apparatus (6) according to any of the preceding claims wherein the elastic strip (15) is received in a recess in the disk (16) and the securing unit (8) is guided through a recess in the disk (16).

6. The captive apparatus (6) according to any of the preceding claims wherein the disk (16) is placed in a dedicated recess of the elastic strip (15) and is bordered by the elastic strip (15) on the side opposite the screw head (5) wherein the through hole (26) of the disk (16) is larger than the inner diameter (24) of the elastic strip (15).

7. The captive apparatus (6) according to any of the preceding claims wherein the disk (16) is slotted and is received in the elastic strip (15).

8. The captive apparatus (6) according to any of the preceding claims wherein the screw shaft (10) is received through the elastic strip (15) which penetrates the slot (25).

9. The captive apparatus (6) according to at least one of the preceding claims wherein the screw head (5) is in direct contact with the disk (16) which in turn is in direct contact with the protective covering (2) or the machinery part (3) and/or is received in the elastic strip (15) so as to enable fastening at a defined rotational force.

10. The captive apparatus (6) according to any of the preceding claims wherein the elastic strip (15) consists at least in part of woven wire (21).

11. Protective device (1) for at least one machinery part (2) with at least one protective covering (3) and at least one screw (4) for fastening the protective covering (3) to a screw hole (13) of the machinery part (2), **characterized in that** at least one captive apparatus (6) according to any of the preceding claims is provided to captively receive the screw (4) on the protective covering (3) or the machinery part (2).

12. The protective device (1) according to claim 11 wherein the captive apparatus (6) is riveted, screwed, glued, welded or clipped to the protective covering (3) and/or the machinery part or is connected with the protective covering (3) by means of a cotter pin or a retaining means (18).

## Revendications

1. Dispositif anti-perte (6) comprenant une unité de sûreté (8) et une vis (4) reliée de manière imperdable à celle-ci et fixée de manière rotative par rapport à l'unité de sûreté (8), lequel peut être relié sur au moins un point de liaison (7) à un objet à fixer, en particulier un revêtement de protection (3) ou un organe de machine (2),
**caractérisé par le fait**
**que** ladite unité de sûreté (8) comprend un disque rigide (16) destiné à appuyer la vis (4) ainsi qu'une bande élastique (15) pour réaliser d'une manière flexible ladite unité de sûreté (8) et pour appuyer de manière rigide ladite vis (4), le disque (16) présentant une ouverture de passage qui présenté un diamètre intérieur (26) supérieur au diamètre intérieur (24) d'un trou traversant de la bande élastique (15), et la vis (4) n'étant maintenue sur la bande élastique (15) que par l'intermédiaire de la bande élastique (15) par le fait que la matière de la bande élastique (15) est refoulée localement par le filet.

2. Dispositif anti-perte (6) selon la revendication 1, dans lequel ladite unité de sûreté (8) est réalisée au moins en partie dans une matière élastique et ladite bande élastique (15) est fixée sur le disque (16) et est reçue sur la tige de vis (10).

3. Dispositif anti-perte (6) selon l'une quelconque des revendications précédentes, dans lequel au moins un diamètre intérieur libre minimal (11) du trou traversant (9) est inférieur à un diamètre extérieur (14) du filet (19) de la tige de vis (10) de la vis (4) et/ou inférieur à un diamètre extérieur (12) de la tige de vis (10).

4. Dispositif anti-perte (6) selon l'une quelconque des revendications précédentes, dans lequel le disque (16) présente un diamètre extérieur (22) plus large montrant vers la tête de vis (5) et un diamètre extérieur (23) plus étroit montrant dans la direction opposée à la tête de vis, le disque étant logé dans un évidement de la bande élastique (15), prévu à cette fin, de manière à permettre une fixation avec un couple défini.

5. Dispositif anti-perte (6) selon l'une quelconque des revendications précédentes, dans lequel la bande élastique (15) est logée dans un évidement présent dans le disque (16) et l'unité de sûreté (8) passe à travers un évidement présent dans le disque (16).

6. Dispositif anti-perte (6) selon l'une quelconque des revendications précédentes, dans lequel le disque (16) est inséré dans un évidement de la bande élastique (15), prévu à cette fin, et est bordé par la bande élastique (15) sur le côté situé en vis-à-vis de la tête de vis (5), ladite ouverture de passage (26) du disque (16) étant plus grande que le diamètre intérieur (24) de la bande élastique (15).

7. Dispositif anti-perte (6) selon l'une quelconque des revendications précédentes, dans lequel le disque (16) est fendu et est logé dans la bande élastique (15).

8. Dispositif anti-perte (6) selon l'une quelconque des revendications précédentes, dans lequel la tige de vis (10) est reçue par la bande élastique (15) pénétrant la fente (25).

9. Dispositif anti-perte (6) selon l'une au moins des revendications précédentes, dans lequel la tête de vis (5) est en contact direct avec le disque (16) et celui-ci est en contact direct avec le revêtement de protection (2) ou l'organe de machine (3) et/ou est logé dans la bande élastique (15) de manière à permettre une fixation avec un couple défini.

10. Dispositif anti-perte (6) selon l'une quelconque des revendications précédentes, dans lequel la bande élastique (15) est réalisée au moins en partie dans un treillis en fil métallique (21).

11. Dispositif de protection (1) pour au moins un organe de machine (2), comprenant au moins un revêtement de protection (3) et au moins une vis (4) destinée à fixer ledit revêtement de protection (3) sur une ouverture de vissage (13) de l'organe de machine (2),
**caractérisé par le fait**
**qu'**au moins un dispositif anti-perte (6) selon l'une quelconque des revendications précédentes est prévu afin de recevoir de manière imperdable ladite vis (4) sur le revêtement de protection (3) ou sur l'organe de machine (2).

12. Dispositif de protection (1) selon la revendication 11, dans lequel ledit dispositif anti-perte (6) est fixé par rivetage, vissage, collage, soudage ou clipsage sur le revêtement de protection (3) et/ou l'organe de machine ou est relié au revêtement de protection (3) par l'intermédiaire d'une goupille fendue ou d'un moyen de fixation (18).
